(19) Europäisches Patentamt
European Patent Office
Office européen des brevets

(11) **EP 3 794 895 B1**

(12) **FASCICULE DE BREVET EUROPEEN**

(45) Date de publication et mention
de la délivrance du brevet:
**21.12.2022 Bulletin 2022/51**

(21) Numéro de dépôt: **19730198.9**

(22) Date de dépôt: **15.05.2019**

(51) Classification Internationale des Brevets (IPC):
**H04W 72/12** *(2009.01)*     **H04W 76/14** *(2018.01)*

(52) Classification Coopérative des Brevets (CPC):
**H04W 72/1231; H04W 76/14; Y02D 30/70**

(86) Numéro de dépôt international:
**PCT/FR2019/051101**

(87) Numéro de publication internationale:
**WO 2019/220056 (21.11.2019 Gazette 2019/47)**

(54) **ALLOCATION DE RESSOURCES DE TRANSMISSION À DES TERMINAUX D2D DANS UN RÉSEAU D'ACCÈS CELLULAIRE**

ZUWEISUNG VON ÜBERTRAGUNGSRESSOURCEN AN D2D-ENDGERÄTE IN EINEM ZELLULAREN ZUGANGSNETZWERK

ALLOCATING TRANSMISSION RESOURCES TO D2D TERMINALS IN A CELLULAR ACCESS NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2018 FR 1854186**

(43) Date de publication de la demande:
**24.03.2021 Bulletin 2021/12**

(73) Titulaire: **Orange**
**92130 Issy-les-Moulineaux (FR)**

(72) Inventeurs:
• **IBRAHIM, Rita**
**92326 Châtillon Cedex (FR)**
• **SAYRAC, Berna**
**92326 Châtillon Cedex (FR)**
• **ASSAAD, Mohamad**
**91192 Gif Sur Yvette (FR)**

(56) Documents cités:
• **TANG HUAN ET AL: "Monotonic optimization for power control of D2D underlay with partial CSI", 2016 IEEE INTERNATIONAL CONFERENCE ON COMMUNICATIONS (ICC), IEEE, 22 mai 2016 (2016-05-22), pages 1-6, XP032922774, DOI: 10.1109/ICC.2016.7511619**
• **AIJAZ ADNAN ET AL: "Energy-Efficient Uplink Resource Allocation in LTE Networks With M2M/H2H Co-Existence Under Statistical QoS Guarantees", IEEE TRANSACTIONS ON COMMUNICATIONS, IEEE SERVICE CENTER, PISCATAWAY, NJ. USA, vol. 62, no. 7, 1 juillet 2014 (2014-07-01), pages 2353-2365, XP011553643, ISSN: 0090-6778, DOI: 10.1109/TCOMM.2014.2328338 [extrait le 2014-07-18] cité dans la demande**
• **RITA IBRAHIM ET AL: "When Distributed outperforms Centralized Scheduling in D2D-Enabled Cellular Networks", ARXIV.ORG, CORNELL UNIVERSITY LIBRARY, 201 OLIN LIBRARY CORNELL UNIVERSITY ITHACA, NY 14853, 6 juin 2018 (2018-06-06), XP080887650,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine de l'invention

La présente invention se rapporte au domaine des télécommunications. Au sein de ce domaine, l'invention se rapporte plus particulièrement aux réseaux d'accès et à l'allocation de ressources pour établir des communications.

### Art antérieur

Un réseau d'accès à un système de télécommunication comprend un point d'accès qui fait l'interface entre un terminal et le réseau d'accès. Dans un réseau d'accès cellulaire, parfois dit réseau mobile, le point d'accès est communément appelé station de base.

Un terminal mobile qui veut établir une communication avec un destinataire doit être identifié auprès d'une station de base et doit demander à être servi par la station de base. La station de base peut servir le terminal si elle peut lui allouer une ressource spectrale.

Les réseaux d'accès mobiles sont confrontés à une demande croissante d'établissements de communication qui se traduit par une augmentation de la charge des stations de base. Lorsque la station de base a alloué toutes ses ressources spectrales, elle a atteint la pleine charge. Elle ne peut plus servir de nouveau terminal tant qu'il n'y a pas de libération d'une de ses ressources spectrales.

La notion de communications en direct (D2D Device To Device selon la terminologie anglosaxonne) entre deux terminaux au sein d'un réseau d'accès a été introduite [1].

La station de base BS connait les terminaux actifs dans sa zone de couverture radio compte tenu des échanges dans le canal de signalisation parfois désigné par voie de retour. Ces terminaux sont dits identifiés. Généralement, la station de base identifie ces terminaux en récupérant un identifiant fourni par tout terminal qui cherche à accéder au réseau d'accès. Selon le type du réseau d'accès, l'identifiant correspond par exemple au MSISDBN, plus communément désigné par les termes numéro de téléphone. La station de base connaît en outre les destinataires des communications demandées par les différents terminaux identifiés. La station de base est donc en mesure de détecter des paires de terminaux situés dans sa zone de couverture qui sollicitent l'établissement d'une communication et qui sont donc susceptibles de mettre en œuvre une communication en directe sans passer par la station de base.

Une paire de terminaux dits D2D établit ainsi une communication sans passer par la station de base. Ceci nécessite que les deux terminaux soient à proximité l'un de l'autre à une distance maximale fonction de la technologie mise en œuvre pour assurer la transmission.

Ces communications directes ne sont pas sans impact sur les communications établies via la station de base. En effet, elles génèrent des interférences plus particulièrement sur les communications des terminaux qui partagent la même ressource spectrale.

Ces communications directes permettent d'augmenter le nombre de communications au-delà de la pleine charge de la station de base et donc permettent d'améliorer l'efficacité spectrale du réseau d'accès.

La connaissance par la station de base de l'état du canal de propagation permet d'adapter l'allocation des ressources et d'améliorer les performances des communications établies par le réseau d'accès. Toutefois, la station de base ne peut pas connaître l'état de tous les canaux sauf à surcharger la signalisation entre les terminaux et la station de base.

Les auteurs de [2] proposent un modèle d'allocation de ressources qui prend uniquement en compte une statistique des canaux et qui optimise l'efficacité énergétique des utilisateurs sous contrainte de leur qualité de service (débit) dans un scénario où les communications D2D sont autorisées. Ainsi [2] décompose le problème d'optimisation en problèmes duales et résout ces problèmes au moyen d'un algorithme itératif. Cette approche très complexe en nombre de calculs donne une solution sous-optimale.

L'article "Monotonic optimisation for power control of D2D underlay with partial CSI", par TANG HUAN ET AL, dans les actes de la "2016 IEEE INTERNATIONAL CONFERENCE ON COMMUNICATIONS (ICC)", divulgue un procédé d'allocation de ressources de transmission tel que défini dans le préambule de la revendication 1.

### Exposé de l'invention

L'invention propose une allocation de ressources mis en œuvre par un réseau d'accès cellulaire comprenant une station de base qui optimise les performances des communications D2D au niveau du réseau d'accès.

L'invention a pour objet un procédé d'allocation de ressources à au moins un terminal d'un ensemble de $N$ paires de terminaux d'indice n, $N \geq 2$, candidats à une communication en direct, dits terminaux D2D. Le canal entre deux terminaux D2D en communication en direct est dit canal D2D. La station de base a la connaissance d'une statistique de l'état des canaux D2D. Le procédé comprend pour un intervalle de transmission :

- une détermination par la station de base d'un sous-ensemble parmi différents sous-ensembles de terminaux D2D de l'ensemble qui minimise de manière statistique une fonction d'utilité $v_n(t)$,
- une requête de la station de base aux terminaux D2D du sous-ensemble leur demandant de remonter simultanément une puissance minimale et un débit maximal qui minimisent leur métrique d'utilité,
- une détermination par chaque terminal D2D du sous-ensemble d'une puissance minimale et d'un débit maximal qui minimisent sa métrique d'utilité,
- une remontée par les terminaux D2D du sous-ensemble vers la station de base de leur puissance minimale et de leur débit maximal déterminés,
- une détermination par la station de base d'un terminal D2D, parmi les terminaux D2D du sous-ensemble, dont la fonction d'utilité appliquée à sa puissance et son débit remontés est minimale pour lui allouer des ressources spectrales pour transmettre pendant l'intervalle de transmission.

De manière avantageuse selon l'invention, seuls les terminaux D2D du sous-ensemble déterminé par la station de base font un retour sur l'état instantané de leur canal D2D et sur leur puissance nécessaire pour atteindre un débit minimal. La remontée d'information vers la station de base est donc restreinte au sous-ensemble ce qui permet de limiter la surcharge de la signalisation. L'état instantané du canal D2D et la puissance nécessaire remontés sont utilisés pour calculer l'efficacité énergétique des communications D2D.

La connaissance du canal passe pour les réseaux de type LTE définis par le 3GPP par une voie de retour à laquelle est associée une signalisation. Cette voie de retour est normalisée pour les terminaux servis par la station de base.

Selon l'invention, la station de base détermine le sous-ensemble de terminaux D2D sur la base d'une connaissance statistique de l'état des canaux D2D. Cette statistique peut être obtenue à partir d'un ou de plusieurs modèles de propagation connus associés aux différents canaux D2D. Un autre mode de réalisation consiste à déterminer la statistique à partir de différentes remontées d'information liée à l'état des canaux D2D sur une période temporelle donnée. Cette statistique peut être une moyenne. L'estimation d'un canal D2D peut s'effectuer par la mesure de signaux de référence connus de l'émetteur et du récepteur d'une paire D2D de manière similaire à l'utilisation faite dans le standard LTE du 3GPP des signaux de référence DMRS (Démodulation Reference Signals). La remontée de l'état du canal (estimation du canal) peut se faire par l'utilisation d'un canal de contrôle PUCCH format 2b du standard LTE du 3GPP.

A partir des données remontées par le sous-ensemble choisi par la station de base et qui représentent des valeurs instantanées des communications D2D, la station de base détermine le terminal D2D qui maximise une métrique instantanée d'efficacité énergétique. Seul ce terminal du sous-ensemble se voit alors allouer une ressource pour transmettre sur l'intervalle de transmission.

L'invention a en outre pour objet une station de base adaptée pour mettre en œuvre un procédé d'allocation de ressources de transmission selon l'invention. La station de base comprend :

- un processeur pour déterminer un sous-ensemble $\Delta^*$ parmi différents sous-ensembles de terminaux D2D de l'ensemble qui minimise de manière statistique une fonction d'utilité $v_n(t)$,
- un émetteur pour émettre une requête à destination des terminaux D2D du sous-ensemble leur demandant de remonter simultanément une puissance minimale et un débit maximal qui minimisent leur métrique d'utilité,
- un récepteur pour recevoir de chaque terminal du sous-ensemble, une puissance minimale et un débit maximal qui minimisent la métrique d'utilité du terminal,
- un processeur pour déterminer un terminal D2D, parmi les terminaux D2D du sous-ensemble $\Delta^*$, dont la fonction d'utilité appliquée à sa puissance et son débit remontés est minimale et pour lui allouer des ressources spectrales pour transmettre pendant l'intervalle de transmission.

L'invention a en outre pour objet un réseau d'accès comprenant au moins une station de base selon un objet de l'invention.

L'invention a en outre pour objet un terminal D2D adapté pour mettre en œuvre un procédé d'allocation de ressources de transmission selon l'invention. Le terminal comprend :

- un récepteur pour recevoir une requête provenant de la station de base lui demandant de remonter simultanément une puissance minimale $P_{n,m}*(t)$ et un débit maximal $R_m*$ qui minimisent une métrique d'utilité,
- une unité de traitement pour déterminer sa puissance minimale $P_{n,m}*(t)$ et son débit maximal $R_m*$ qui minimisent cette métrique d'utilité,
- un émetteur pour transmettre via une voie de retour vers la station de base sa puissance minimale $P_{n,m}*(t)$ et son débit maximal $R_m*$ déterminés,

Le récepteur du terminal reçoit les ressources spectrales qui lui sont allouées par la station de base pour transmettre pendant l'intervalle de transmission.

Selon un mode de réalisation de l'invention, la détermination du sous-ensemble parmi différents sous-ensemble de terminaux D2D de l'ensemble qui minimise de manière statistique une fonction d'utilité $v_n(t)$ consiste à déterminer le sous-ensemble qui minimise la moyenne de la somme des puissances émises minimales sous contrainte de maximiser les débits.

Selon un mode de réalisation de l'invention, la station de base détermine autant de sous-ensembles que de ressources de transmission différentes pouvant être allouées simultanément pendant un même intervalle de transmission (par exemple avec accès de type OFDMA, ou TDMA, ou CDMA).

Selon un mode de réalisation de l'invention, le réseau d'accès est de type LTE et la requête de la station de base utilise un canal de contrôle descendant PDCCH du réseau d'accès.

Selon un mode de réalisation de l'invention, le réseau d'accès est de type LTE et la puissance remontée est quantifiée sur au maximum deux bits d'un canal de contrôle PUCCH.

L'invention s'applique également à un programme d'ordinateur, notamment un programme d'ordinateur sur ou dans un support d'informations, adapté à mettre en œuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé d'allocation de ressources de transmission selon l'invention. Ce programme peut avoir plusieurs modules destinés à des entités différentes telles la station de base et les terminaux D2D.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

**Liste des figures**

D'autres caractéristiques et avantages de l'invention apparaîtront lors de la description qui suit d'exemples donnés à titre d'exemples non limitatifs, description faite en regard des figures annexées suivantes.

La figure 1 est un schéma d'un réseau d'accès avec une station de base et des terminaux D2D identifiés par cette station.
La figure 2 est un organigramme d'un mode de réalisation d'un procédé selon l'invention.
La figure 3 représente des courbes issues de simulations de la puissance consommée en dB/RB en fonction du seuil de SNR $\gamma_{th}$ en dB pour différents procédés d'allocation de ressources.
La figure 4 représente des courbes issues de simulations d'efficacité énergétique pour différents procédés d'allocation de ressources.
La figure 5 est un schéma d'une structure simplifiée d'une station de base mettant un œuvre un procédé d'allocation de ressources de transmission selon l'invention.
La figure 6 est un schéma d'une structure simplifiée d'un terminal D2D mettant un œuvre un procédé d'allocation de ressources de transmission selon l'invention.

**Description de modes de réalisation de l'invention**

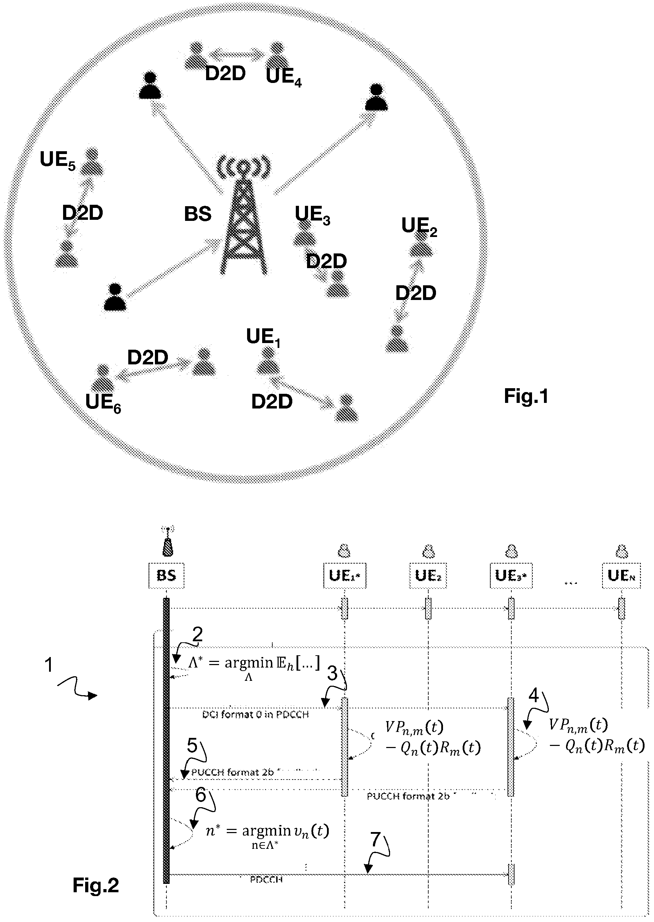

Un réseau d'accès est illustré à la figure 1. Une seule station de base BS est représentée par souci de simplification mais le réseau d'accès peut comprendre d'autres stations de base.

La zone de couverture est représentée de façon très schématique par un rond centré sur la station de base. Bien entendu cette zone a en réalité un contour qui dépend de l'environnement, cet environnement influe en particulier sur les conditions de propagation et donc sur la portée dans une direction donnée. Les terminaux identifiés par la station de base sont représentés répartis plus ou moins régulièrement autour de la station de base. Il est bien entendu que cette représentation est utilisée à des fins d'illustration et qu'en réalité la répartition est totalement aléatoire.

Un terminal qui se voit allouer une ressource spectrale par la station de base pour l'établissement d'une communication relayée par cette station est dit servi. Toutefois, quand la station a alloué toutes ses ressources spectrales elle est à pleine charge et ne peut plus servir de terminal qui demande l'établissement d'une communication.

Lors de la demande d'établissement de la communication, la station de base a connaissance de l'identifiant du destinataire. En comparant avec une liste de terminaux identifiés dans sa zone de couverture, la station de base peut déterminer si le destinataire appartient à cette liste. Ainsi, la station de base peut identifier des paires de terminaux D2D susceptibles d'établir une communication en direct.

Le réseau d'accès comprend ainsi un ensemble $\Omega$ de $N \geq 2$ paires de terminaux D2D, $N$ = 6 selon l'illustration. Par souci de simplification, si des ressources sont allouées aux terminaux D2D alors elles sont différentes des ressources allouées aux terminaux cellulaires (i.e. dont la communication est relayée par la station de base). Ainsi, les interférences causées par les terminaux D2D sur les terminaux cellulaires sont par construction minimisées.

Les liens entre les différents nœuds du système sont sujets à des évanouissements (Rayleigh fading) et à du bruit blanc Gaussien. Les gains de canal sont supposés constants pendant un intervalle de transmission (time slot). Ils changent indépendamment d'un intervalle de transmission à un autre en suivant une distribution gaussienne complexe de moyenne nulle et de variance unitaire.

Un mécanisme entre les paires D2D permet au terminal émetteur $UE_1$,.., $UE_6$ de la paire de connaître un état CSI (Channel State Information) du canal D2D correspondant. Citons pour exemple [3] qui décrit l'utilisation de signaux de référence pour la détermination du gain de canal entre l'émetteur et le récepteur de la n[ième] paire D2D de manière comparable à l'utilisation faite dans le LTE des signaux de référence de démodulation DMRS qui sont intégrés dans le signal de transmission. Il est donc considéré que l'émetteur $UE_n$ d'une paire D2D peut estimer un état instantané (par exemple le gain de canal $h_n$) du canal D2D à chaque intervalle de transmission. Ce terminal UE peut en déduire la puissance $P_n(t)$ et le débit $R_n(t)$ qui minimisent une fonction d'utilité $\upsilon_n(P_n(t), R_n(t))$ déterminée connue des terminaux D2D. Cette fonction d'utilité dépend de l'état $h_n$ du canal.

Un procédé d'allocation de ressources de transmission selon l'invention est détaillé ci-après et illustré par l'organigramme représenté à la figure 2. L'organigramme illustré correspond à une implémentation dans un réseau d'accès compatible d'un standard LTE du 3GPP.

Il est considéré que quelques ressources radio sont disponibles pour les émetteurs $UE_1$,.., $UE_6$ des paires D2D à chaque intervalle de transmission pour la remontée d'une information sur l'état des canaux D2D. Par exemple un nombre limité de blocs de ressources $N_{RB}$ (Ressource Blocks) est disponible à chaque intervalle de transmission TTI, en référence au standard LTE. A partir de ces retours, la station de base BS calcule régulièrement une statistique de l'état de tous les canaux D2D.

Le débit bit/s (bit rate) $R$ associé à un lien est supposé en correspondance direct avec les performances radio de ce lien i.e. le rapport signal à bruit SNR (Signal to Noise Ratio) à la réception (la correspondance peut résulter du calcul *débit* = *log*(1 + *SNR*) ou résulter d'un mappage effectué à l'issue des simulations de liens).

Le réseau d'accès est paramétré avec un jeu de $M$ seuils de SNR, $\{\gamma_1, \dots, \gamma_M\}$ utilisés pour quantifier le SNR à la réception de chacun des liens D2D : si un lien D2D a un SNR compris entre deux seuils du jeu alors son SNR est choisi égal au seuil inférieur, $\gamma_i \leq SNR < \gamma_{i+1} \Rightarrow SNR = \gamma_i$. Ainsi, le système distingue $M$ débits $\{R_1, \dots, R_M\}$ qui sont en correspondance directe avec les $M$ seuils de SNR $\{\gamma_1, \dots, \gamma_M\}$ i.e. si le lien D2D a un SNR $\gamma_i$ alors il permet d'atteindre un débit $R_i$.

Un réseau LTE identifie quinze valeurs pour la qualité d'un canal codées avec un index à quatre bits auquel correspond quinze valeurs de débit: $\{R_1, \dots, R_M\} = \{R_1, \dots, R_{15}\}$. Donc $R_n(t) \in \{R_1, \dots, R_{15}\}$.

Pour atteindre le débit $R_i$, la puissance d'émission de l'émetteur du lien D2D $n \in N$ est déterminée par :

$$P_{n,i} = min\left\{\frac{\gamma_i N_o}{|h_n|^2 L_n}, P_{max}\right\} \qquad (1)$$

avec $h_n$ le coefficient d'évanouissement (fading) du lien D2D $n$ dit encore gain du canal, $L_n$ l'atténuation du lien (path-loss) qui dépend essentiellement de la distance $d_n$ entre les terminaux de la paire D2D, $N_o$ la puissance du bruit à la réception et $P_{max}$ la puissance maximale disponible à l'émetteur $UE_1$,.., $UE_6$ de la paire D2D.

L'accès au canal est supposé de type TDMA de telle manière qu'une seule communication D2D bénéficie de ressources à chaque intervalle de transmission. Dit autrement, au plus un seul terminal D2D se voit allouer une/des ressources à chaque intervalle de transmission.

Pour un intervalle de transmission (time-slot) donné $t$, les notations suivantes sont utilisées :

$H(t) = [h_1, h_2, \dots, h_N]$ le vecteur de l'état des canaux (gains des canaux) des $N$ paires D2D, $R_n(t)$ le débit de la n[ième] communication D2D, $P_n(t)$ la puissance d'émission pour cette n[ième] communication D2D, $R_{th}$ le seuil du débit moyenné en temps (time average throughput) qui correspond au seuil de SNR $\gamma_{th}$, $\boldsymbol{P}(t)$ la matrice de dimensions $N \times M$ des puissances des $N$ paires de terminaux D2D pour obtenir les M débits $\{R_1, \dots, R_M\}$ :

$$P(t) = \begin{bmatrix} P_{1,1} \; P_{1,2} \dots P_{1,M} \\ P_{2,1} \; P_{2,2} \dots P_{2,M} \\ \dots \quad \dots \quad \dots \quad \dots \\ P_{N,1} \, P_{N,2} \, \dots P_{N,M} \end{bmatrix}$$

(la variable t a été supprimée dans la matrice pour ne pas la surcharger)

Le procédé selon l'invention apporte une solution à un problème d'optimisation. Ce problème consiste à chaque intervalle de transmission à proposer une sélection (stratégie) $\Gamma$ qui identifie quelles informations à remonter sur l'état des canaux et identifie conjointement le terminal auquel est alloué une ressource tout en respectant une limitation des ressources disponibles pour le retour d'information dans le but de minimiser la consommation d'énergie des communications D2D sous contrainte d'un débit moyen (throughput). Ce problème peut s'écrire sous la forme :

$$\min_{\Gamma} \lim_{T\to\infty} \sup \frac{1}{T} \sum_{t=1}^{T} \sum_{n=1}^{N} \mathbb{E}[P_n(t)] \qquad (2)$$

sous contrainte que $\quad \lim_{T\to\infty} \inf \frac{1}{T} \sum_{t=1}^{T} \mathbb{E}[R_n(t)] \geq R_{th}, \forall n$

L'utilisation d'une technique de Lyapunov [4] permet d'écrire différemment le problème (2) d'optimisation en introduisant des queues virtuelles $Q_n$, $Q_n(t+1) = max((Q_n(t) - R_n(t)), 0) + R_{th}$.

$Q$ est le vecteur des queues virtuelles pour tous les émetteurs $UE_n$ des paires de terminaux D2D : $Q = [Q_1, Q_2, \dots, Q_N]$.

Le problème d'optimisation (2) revient alors à minimiser la consommation d'énergie du réseau d'accès tout en garantissant la stabilité des queues et ceci bien que les ressources disponibles pour le retour d'information (feedback) soient limitées.

La stabilité des queues est obtenue en minimisant l'expression suivante :

$$\min_{\Gamma} \sum_{n=1}^{N} V\mathbb{E}[P_n(\Gamma(t))] - Q_n(t)\mathbb{E}[R_n(\Gamma(t))]$$

$$(3)$$

avec $V$ un (poids) réel positif dite constante de Lyapunov choisie de manière à permettre le compromis entre la minimisation de la puissance et la taille des queues.

Selon le procédé 1, la station de base BS détermine 2 un sous-ensemble $\Lambda^*$ parmi les différents sous-ensembles $\Lambda$ de l'ensemble $\Omega$ des terminaux D2D. Ce sous-ensemble $\Lambda^*$ est constitué de $K^{(1)}$ terminaux émetteurs $UE_1, \dots, UE_{K(1)}$ de paires D2D chacune de canal $h_n$ qui minimisent de manière statistique une fonction d'utilité $v_n(t)$, c'est-à-dire qui en moyenne minimisent la somme des puissances émises $P_n(t)$ sous contrainte de maximiser les débits $R_n(t)$ :

$$\Lambda^* = \operatorname{argmin}_{\Lambda \subset \Omega} \mathbb{E}_h \left[ \sum_{n\in\Lambda} v_n(P_n(t), R_n(t)) \right]$$

$$\Lambda^* = \operatorname{argmin}_{\Lambda \subset \Omega} \mathbb{E}_h [\min_{n\in\Lambda}[VP_n(t) - Q_n(t)R_n(t)]]$$

Dit autrement le sous-ensemble $\Lambda^*$ maximise une métrique d'efficacité énergétique moyennée.

Le procédé comprend une requête 3 de la station de base aux $K^{(1)}$ terminaux D2D du sous-ensemble $\Lambda^*$ leur demandant de remonter simultanément une puissance minimale et un débit maximal qui minimisent leurs métriques d'utilité respectives (maximisant ainsi l'efficacité énergétique).

Pour un déploiement dans un réseau LTE, la requête peut prendre la forme d'un signal de contrôle PDCCH (Physical Downlink Channel Control) avec une information de contrôle descendant DCI (Downlink Control Information) de format 0.

A réception de cette requête, les terminaux D2D du sous-ensemble déterminent 4 via l'équation (1) un niveau de puissance sous contrainte d'atteindre le débit déduit de l'état instantané du canal pour maximiser la métrique d'efficacité énergétique. Chaque terminal D2D du sous-ensemble détermine l'index $m^* \in \{1, \dots, M\}$ qui minimise sa métrique d'utilité $VP_{n,m}(t) - Q_n(t)R_m(t)$ pour une valeur de canal instantanée donnée.

Les terminaux qui reçoivent cette requête, utilisent leur estimation du canal pour trouver le couple (puissance, débit) qui minimisent leur fonction d'utilité $\upsilon_n(t)$. Autrement dit, le terminal émetteur D2D utilise son estimation du canal D2D $h_n$ pour calculer les quinze puissances de transmission nécessaires pour atteindre respectivement chacun des quinze débits (R1 ...R15) en utilisant l'équation (1). Parmi ces quinze couples de puissance et de débit, le terminal D2D choisi le couple qui minimise sa fonction d'utilité $\upsilon_n(t)$ (avec $Q_n$ connu par le terminal D2D et dont la valeur varie selon l'équation $Q_n(t+1) = (Q_n(t) - R_n(t))^+ + R_{th}$ ). Ainsi, chaque terminal émetteur D2D du sous-ensemble détermine l'index $m^* \in \{1, ...,M\}$ qui minimise sa métrique d'utilité $VP_{n,m}(t) - Q_n(t)R_m(t)$ pour une valeur de canal instantanée donnée.

Ceci revient donc pour un terminal d'une paire D2D à déterminer la puissance minimale pour atteindre un débit maximal sous contrainte d'efficacité énergétique. Connaissant l'index $m^*$, le terminal D2D détermine la puissante et le débit correspondant qui optimisent sa fonction d'utilité : $R_n(t) = R_{m^*}$, $P_n(t) = P_{n,m^*}(t)$

Les terminaux D2D du sous-ensemble remontent 5 à la station de base le couple de puissance et de débit qui minimise leur fonction d'utilité.

Considérons un réseau LTE qui identifie $N_{RB}$ ressources radio pour la remontée d'informations depuis les terminaux à la station de base. Cette remontée peut s'effectuer dans un réseau LTE au moyen d'un signal de contrôle PUCCH (Physical Uplink Control Channel) format 2b.

Pour les transmissions descendantes (downlink), le standard LTE définit essentiellement deux formats du signal PUCCH dépendant du type d'information traité :

- les formats 1, 1a ou 1b avec un à deux bits codés dédiés pour le retour des accusés de réception ACK/NACK,
- les formats 2, 2a ou 2b avec vingt à vingt-deux bits codés dédiés pour le retour de l'état du canal CSI (Channel State Information) regroupés en trois composantes : l'index de rang RI (Rank Index), l'index de matrice de précodage PMI (Precoding Matrix Index) et l'index de qualité de canal CQI (Channel Quality Index). Ces trois composantes sont déterminées par le terminal (récepteur) à partir de l'estimation de l'état instantané du canal descendant effectuée en exploitant des pilotes descendants (downlink pilots).

Un signal de contrôle PUCCH avec un format 2b comprend un CQI (Channel Quality Indicator) et deux bits pour coder un accusé de bonne réception ou de mauvaise réception ACK/NACK. Les bits réservés au CQI codent une valeur représentative du débit.

Selon ce mode illustré de réalisation du procédé 1, la remontée de la puissance est codée en utilisant les bits réservés à l'accusé de réception. Ainsi, la puissance qui suit des valeurs continues est quantifiée en la mappant sur les quatre valeurs : $\{\tilde{P}_1,\tilde{P}_2,\tilde{P}_3,\tilde{P}_4\}$, la puissance remontée $\tilde{P}_n(t) \in \{\tilde{P}_1,\tilde{P}_2,\tilde{P}_3,\tilde{P}_4\}$, Il est alors possible selon le standard LTE de déterminer le nombre maximal $K^{(1)}$ de retours de CSI pouvant être effectués simultanément compte tenu du format 2b choisi du signal de contrôle PUCCH. $K^{(1)}$ est le produit de deux valeurs :

- $N_{RB}$ le nombre de blocs de ressources (RB, Ressource Blocks) disponibles pour un canal de contrôle PUCCH de format 2, 2a ou 2b à chaque intervalle de temps TTI (time-slot) pour la remontée des CSI,
- $C_{MUX}$ qui donne la capacité de multiplexage par RB c'est-à-dire le nombre d'utilisateurs qui peuvent remonter leur CSI sur le même PRB. Pour un réseau LTE, $C_{MUX} = 12$

Donc $K^{(1)} = N_{RB} \times C_{MUX} = 12N_{RB}$

Selon cette implémentation du procédé, l'accusé de bonne réception ou de mauvaise réception ACK/NACK n'est codé que pour les signaux de contrôle PUSCH ou PUCCH de format 1, 1a ou 1b.

La station de base détermine 6 le terminal D2D $n^*$ parmi les terminaux D2D du sous-ensemble $\Lambda^*$ qui maximise la métrique instantanée d'efficacité énergétique. La station de base calcule la fonction d'utilité $\upsilon_n$ de chacun des terminaux D2D du sous-ensemble $\Lambda^*$ en utilisant les $K^{(1)}$ valeurs remontées des $K^{(1)}$ terminaux du sous-ensemble $\Lambda^*$. Le terminal D2D $n^*$ est celui dont la fonction d'utilité $\upsilon_n$ est minimale :

$$n^* = \mathrm{argmin}_{n \in \Lambda^*} \, \upsilon_n(t) = \underset{n \in \Lambda^*}{\mathrm{argmin}} \, [V\tilde{P}_n(t) - Q_n(t)R_n(t)] \qquad (5)$$

La station de base alloue à ce terminal D2D $n^*$ des ressources spectrales pour lui permettre de transmettre pendant l'intervalle $t$ de transmission.

La station de base met à jour sa statistique de l'état de tous les canaux en utilisant les $K^{(1)}$ valeurs remontées.

Le procédé 1 conduit à une distance au plus égale à $\mathcal{O}\left(\frac{1}{V}\right)$ de la solution optimale notée $P_c^*$ au problème d'optimisation traduit par les équations (2) tout en garantissant la stabilité du système des queues virtuelles. La démonstration en est donnée en Annexe A.

Selon un mode de réalisation, les ressources spectrales du réseau d'accès sont découpées en plusieurs blocs de ressources. Chaque bloc de ressources peut faire l'objet d'une allocation à un terminal D2D qui peut être différent entre les blocs. Le procédé d'allocation selon l'invention peut ainsi être mis en œuvre pour au moins deux des blocs et éventuellement pour chacun des différents blocs et conduire à l'allocation à des terminaux différents de blocs différents de ressources.

Des simulations ont été réalisées dans le contexte d'un système LTE avec les paramètres donnés dans le tableau 1 en Annexe A

Le LTE considérant seize valeurs différentes pour un CQI, les simulations ont considérées seize débit-bits (bit-rates), i.e. $M = 15$. Les valeurs de ces débit-bits $\{R_1, ... , R_{15}\}$ correspondent au jeu de SNR $\{\gamma_1, ...,\gamma_{15}\}$ = $\{0,1, ...,14\}dB$. Les $N$ paires de terminaux D2D sont supposées réparties uniformément dans la cellule. L'accès au réseau des communications de ces terminaux dépend du procédé d'allocation de ressources.

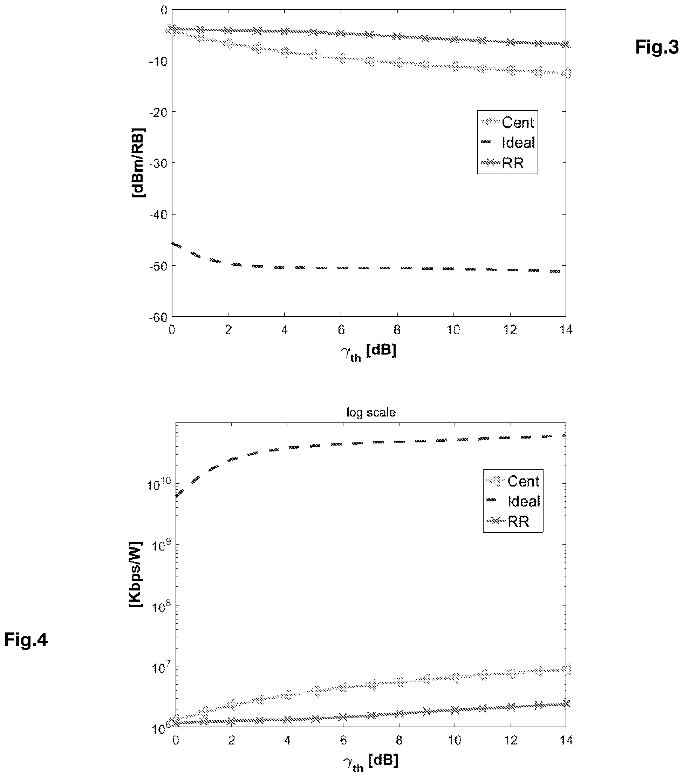

La figure 3 donne des courbes de puissance de transmission en dB/RB en fonction du seuil de SNR $\gamma_{th}$ en dB. Les courbes correspondent à un procédé d'allocation de ressources selon l'invention (trait avec des flèches), à un procédé idéal d'allocation de ressources (trait pointillé) et à un procédé d'allocation de ressources round robin (trait avec des croix).

Le procédé idéal d'allocation de ressources est basé sur la connaissance par la station de base de l'état de tous les canaux D2D. Selon le procédé d'allocation de ressources round robin chaque sous-ensemble A de l'ensemble $\Omega$ des terminaux D2D se voit allouer des ressources de manière identique et circulaire dans le temps.

La comparaison des courbes permet d'observer que le procédé centralisé selon l'invention réduit la puissance transmise dépensée en moyenne par rapport au procédé round robin pour différentes valeurs de seuils de SNR, $0 \leq \gamma_{th} \leq 14$ $dB$.

La figure 4 donne des courbes d'efficacité énergétique pour les mêmes procédés d'allocation de ressources que ceux considérés pour la figure 3. L'efficacité énergétique est évaluée comme étant le rapport entre le débit total (total throughput) et la puissance transmise totale pour la durée de l'ensemble des simulations. Ainsi la figure 4 représente l'évolution de l'efficacité énergétique en Kbps/W (rapport entre le débit total en kbits/s et la puissance émise en W) des différents procédés en fonction du seuil de SNR $\gamma_{th}$ en dB. La comparaison des courbes met en avant que le procédé centralisé selon l'invention améliore l'efficacité énergétique par rapport au procédé round robin pour différentes valeurs de seuils de SNR, $0 \leq \gamma_{th} \leq 14$ $dB$.

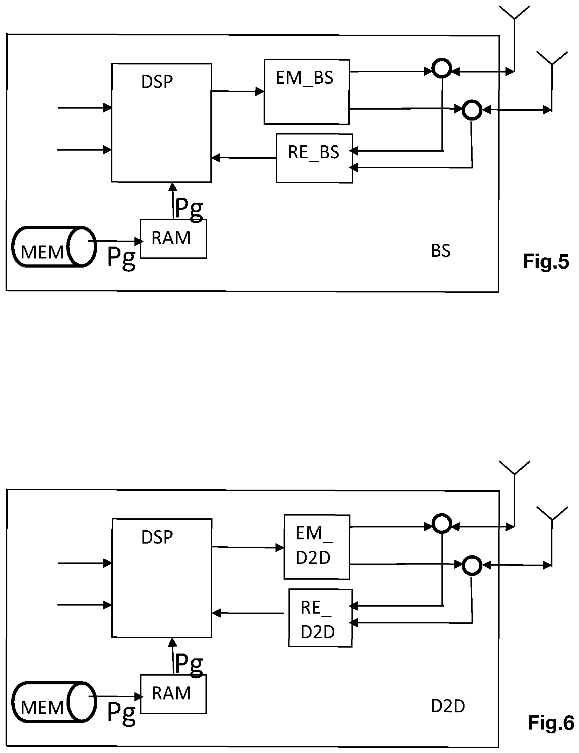

La structure simplifiée d'une station de base selon l'invention mettant en œuvre un procédé d'allocation de ressources décrit précédemment est décrite ci-après et illustrée par la figure 5.

Une telle station de base BS comprend un émetteur EM_BS, un récepteur RE_BS, une mémoire MEM comprenant une mémoire tampon RAM, une unité de traitement DSP, équipée par exemple d'un microprocesseur et pilotée par le programme d'ordinateur Pg ou éventuellement un module spécifique du programme d'ordinateur Pg mettant en œuvre le procédé d'allocation de ressources selon l'invention.

A l'initialisation, les instructions de code du programme d'ordinateur Pg sont par exemple chargées dans la mémoire RAM avant d'être exécutées par le processeur de l'unité de traitement DSP.

L'unité de traitement DSP détermine un sous-ensemble $\Delta^*$ parmi différents sous-ensembles de terminaux D2D de l'ensemble $\Omega$ qui minimise de manière statistique une fonction d'utilité $\upsilon_n(t)$.

L'émetteur EM_BS émet une requête à destination des terminaux D2D du sous-ensemble $\Delta^*$ leur demandant de remonter simultanément une puissance minimale $\boldsymbol{P}_{n,m}*(t)$ et un débit maximal $\boldsymbol{R}_m*(t)$ qui minimisent leur métrique d'utilité.

Le récepteur RE_BS reçoit via une voie de retour une puissance minimale $\boldsymbol{P}_{n,m}*(t)$ et un débit maximal $\boldsymbol{R}_m*(t)$ provenant de chaque terminal du sous-ensemble $\Delta^*$ qui minimisent la métrique d'utilité du terminal.

L'unité de traitement DSP reçoit en entrée les puissances minimales $\boldsymbol{P}_{n,m}*(t)$ et les débits maximaux $\boldsymbol{R}_m*(t)$. Le microprocesseur de l'unité de traitement DSP met en œuvre le procédé d'allocation de ressources décrit précédemment, selon les instructions du programme d'ordinateur Pg. Pour cela, l'unité de traitement DSP pilotée par le microprocesseur détermine un terminal D2D, dont la fonction d'utilité appliquée à sa puissance et son débit remontés est minimale entre tous les terminaux D2D du sous-ensemble $\Delta^*$. L'unité de traitement DSP alloue des ressources spectrales à ce terminal pour transmettre pendant l'intervalle de transmission. Ce terminal est celui parmi les terminaux du sous-ensemble qui maximise une métrique d'efficacité énergétique.

La structure simplifiée d'un terminal D2D selon l'invention mettant un œuvre un procédé d'allocation de ressources décrit précédemment est détaillée ci-après et illustrée par la figure 6.

Un tel terminal D2D comprend un émetteur EM_D2D, un récepteur RE_D2D, une mémoire MEM comprenant une mémoire tampon RAM, une unité de traitement DSP, équipée par exemple d'un microprocesseur et pilotée par le programme d'ordinateur Pg ou éventuellement un module du programme d'ordinateur Pg mettant en œuvre le procédé d'allocation de ressources selon l'invention.

A l'initialisation, les instructions de code du programme d'ordinateur Pg sont par exemple chargées dans la mémoire RAM avant d'être exécutées par le processeur de l'unité de traitement DSP. Le microprocesseur de l'unité de traitement DSP met en œuvre le procédé d'allocation de ressources décrit précédemment, selon les instructions de code du programme d'ordinateur Pg.

Ainsi, le récepteur RE_D2D reçoit une requête provenant de la station de base lui demandant de remonter simultanément une puissance minimale $P_{n,m}*(t)$ et un débit maximal $R_m*(t)$ qui minimisent sa métrique d'utilité.

L'unité de traitement DSP détermine sa puissance minimale $P_{n,m}*(t)$ et son débit maximal $R_m*(t)$ qui minimisent sa métrique d'utilité.

L'émetteur EM_D2D transmet via une voie de retour vers la station de base sa puissance minimale $P_{n,m}*(t)$ et son débit maximal $R_m*(t)$ déterminés.

Le récepteur RE_D2D reçoit une identification des ressources spectrales qui lui sont allouées par la station de base pour transmettre pendant l'intervalle de transmission. Ce terminal D2D est celui parmi les terminaux du sous-ensemble qui maximise une métrique d'efficacité énergétique.

Bien que l'invention soit détaillée précédemment à partir d'un mode de réalisation basé sur un réseau cellulaire LTE, l'invention peut tout aussi bien s'utiliser dans un contexte de réseau sans fil, par exemple de type WiFi. Dans ce cas, la station de base est plus connue sous les termes de point d'accès.

Références :

[1] K. Doppler, M. Rinne, C. Wijting, C. Ribeiro, and K. Hugl, "Device-to-device communication as an underlay to lte-advanced networks," IEEE Commun. Mag., vol. 47, no. 12, pp. 42-49, 2009.

[2] A. Aijaz, M. Tshangini, M. Nakhai, X. Chu, and A. Aghvami, "Energy-efficient uplink resource allocation in LTE networks with M2M/H2H co-existence under statistical qos guarantees," Communications, IEEE Transactions on, vol. 62, pp. 2353-2365, 07 2014.

[3] IEEE « Design Aspects of Network Assisted Device-to-Device Communications » de Gábor Fodor, Erik Dahlman, Gunnar Mildh, Stefan Parkvall, Norbert Reider, György Miklós et Zoltân Turányi, publié en mars 2012 dans la revue Communications Magazine

[4] M. J. N. L. Georgiadis and L. Tassiulas, Resource allocation and cross-layer control in wireless networks, 2006, chapitre 4 sections 4.4 et 4.5, pages 49-57.

Annexe A

Le procédé selon l'invention vérifie les propositions 1 et 2 suivantes.

**Proposition 1.**

La totalité des files d'attente des queues virtuelles est en moyenne inférieure à une valeur finie $\frac{C+B}{\epsilon}$ :

$$\lim_{T \to \infty} \sup \frac{1}{T} \sum_{t=0}^{T-1} \sum_{i=1}^{N} \mathbb{E}[Q_i(t)] \leq \frac{C+B}{\epsilon} \tag{6}$$

Le procédé d'allocation de ressources selon l'invention assure une forte stabilité du système de queues virtuelles avec une attente moyenne dans les queues de $\mathcal{O}(V)$. Ainsi, la contrainte de débit (throughput) du problème d'optimisation est satisfaite.

**Proposition 2**

La moyenne temporelle de la puissance émise vérifie l'équation suivante :

$$P_c^* \leq \lim_{T \to \infty} \sup \frac{1}{T} \sum_{t=1}^{T} \sum_{n=1}^{N} \mathbb{E}[P_n(t)] \leq P_c^* + \frac{C}{V} \tag{7}$$

**Démonstration des propositions 1 et 2**

La fonction $L_Q(t)$ de Lyapunov est donnée par la relation $L_Q(t) := \frac{1}{2} \sum_{i=1}^{N} Q_i^2(t)$

En suivant la même méthodologie que dans [4], on peut prouver que l'expression « drift-plus-penalty » est bornée par la borne supérieure suivante :

$$\Delta\big(\boldsymbol{Q}(t)\big) := \Delta\big(\boldsymbol{L}(t)\big) + V \sum_{i=1}^{N} \mathbb{E}\big[(P_i(t)|\boldsymbol{Q}(t))\big]$$

$$\leq C + \sum_{i=1}^{N} Q_i(t)R_{th} - \mathbb{E}\left[\sum_{n=1}^{N} Q_i(t)R_i\big(\Gamma(t),\boldsymbol{H}(t)|\boldsymbol{Q}(t)\big)\right]$$

$$+ V\mathbb{E}\left[\sum_{n=1}^{N} P_i(t)\big(\Gamma(t),\boldsymbol{H}(t)|\boldsymbol{Q}(t)\big)\right] \qquad (19)$$

avec $\Gamma(t)$ la sélection (stratégie) qui identifie quels terminaux vont remonter leur état du canal D2D et identifie conjointement le terminal auquel est alloué une ressource et $C$ une constante telle que :

$$\mathbb{E}\left[\sum_{i=1}^{N} \frac{R_{th}^2 + R_i^2(t)}{2}|\boldsymbol{Q}(t)\right] \leq C$$

A chaque intervalle de temps (time slot), le procédé selon l'invention vérifie l'équation suivante :

$$\mathbb{E}\left[\sum_{i=1}^{N} \big[VP_i\big(\Gamma(t),\boldsymbol{H}(t)\big) - Q_i(t)R_i\big(\Gamma(t),\boldsymbol{H}(t)\big)\big]|\boldsymbol{Q}(t)\right]$$

$$\leq \mathbb{E}\left[\sum_{i=1}^{N} \big[VP_i\big(\Gamma^*(t),\boldsymbol{H}(t)\big) - Q_i(t)R_i\big(\Gamma^*(t),\boldsymbol{H}(t)\big)\big]|\boldsymbol{Q}(t)\right] \qquad (20)$$

où $\Gamma^*(t)$ est la sélection optimal des terminaux qui remontent leur état du canal D2D ainsi que du terminal auquel est alloué une ressource.

Vérification de l'équation (20) : à chaque intervalle de temps $t$ (time-slot), le procédé détermine sur la base d'une statistique globale des CSI le sous-ensemble $\Lambda^*$ des terminaux D2D qui vont remonter leur CSI instantané conformément à l'équation (4). Le terminal $n^*$ schedulé est celui qui a la plus petite valeur $\upsilon_n(t) = V\tilde{P}_n(t) - Q_n(t)R_n(t)$. Le procédé vérifie l'inégalité (20) pour toutes sélections $\Gamma^*(t)$ de retour de CSI et d'allocation de ressources y compris la sélection optimale de l'équation (2).

La solution optimale $\Gamma^*(t)$ vérifie le problème d'optimisation (2) et garantie ainsi la stabilité des queues. En supposant que le vecteur d'arrivée des débits est à l'intérieur de la région de stabilité du système de queues, alors :

$$\mathbb{E}\big[R_i\ (\Gamma^*(t)\ )|\boldsymbol{Q}(t)\big] = \mathbb{E}\big[R_i\ (\Gamma^*(t)\ )\big] \geq R_{th} + \epsilon\ avec\ \epsilon > 0$$

La même méthodologie que dans [4] donne :

$$\lim_{T\to\infty} \sup\frac{1}{T}\sum_{t=0}^{T-1}\sum_{i=1}^{N} \mathbb{E}[Q_i(t)] \leq \frac{C+B}{\epsilon} \qquad (21)$$

avec $B$ une constante finie telle que

$$P_c^* = \lim_{T\to\infty} \sup\frac{1}{T}\sum_{t=0}^{T-1}\ \sum_{i=1}^{N} \mathbb{E}\big[VP_i\ (\Gamma^*(t))\big] \leq B$$

L'expression précédente fixe une limite supérieure de l'arriéré moyen total des queues. Ainsi, toutes les queues du système sont fortement stables. Par suite, à chaque fois que le vecteur de débits à l'arrivée est à l'intérieur de la région de stabilité, la sélection $\Gamma(t)$ proposée assure la forte stabilité des queues du réseau avec un arriéré moyen d'une queue qui est inversement proportionnel à la distance entre le vecteur de débit et la frontière de la région de stabilité. D'où la preuve que la proposition 1 est vérifiée.

Avec la même méthodologie, il vient que :

$$\frac{1}{T}\sum_{t=0}^{T-1}\sum_{i=1}^{N}\mathbb{E}[P_i(t)] \le \frac{C}{V} + \frac{\mathbb{E}[L_Q(0)]}{VT} + \frac{1}{T}\sum_{t=0}^{T-1}\sum_{i=1}^{N}\mathbb{E}[P_i\ (\Gamma^*(t))]$$

D'où la preuve que les propositions 1 et 2 sont vérifiées.

D'où la preuve que les propositions 1 et 2 résultent d'une simple application de l'optimisation de Lyapunov pour un réseau de files d'attente.

Ainsi le procédé centralisé de retour de CSI et d'allocation de ressource atteint une performance à $O(1/V)$ de distance de la performance optimale.

**Tableau 1**

| Paramètre | Valeur |
|---|---|
| rayon de cellule $R_d$ (cell radius) en m | 500 |
| bande (Bandwidth) | 10MHz équivalent à 50RB |
| répartition des terminaux dans la cellule (UE drop) | répartition uniforme avec $d_{min}$ = 3 $m$, $d_{max}$ = 350 $m$, entre paire D2D *distance UE - BS* $\ge$ 35 $m$ |
| $N$ | 50 |
| paramètre de retour (feedback) | $N_{RB}$ = 2, $\Delta_{shift}^{PUCCH} = 1$, $N_{OC}$ = 3, $\Rightarrow$ $K^{(1)}$ = 24 |
| $P_{max}$ en mW | 250 |
| puissance quantifiée en mW | $\tilde{P}_1$ = 50, $\tilde{P}_2$ = 100 $\tilde{P}_3$ = 150, $\tilde{P}_3$ = 200 |
| atténuation (pathloss) | Le modèle d'atténuation (path-loss) donné par le tableau A.2.1.2 (première colonne outdoor-to-outdoor) du document 3GPP TR 36.843 |
| paramètres de simulations | $t_{simu}$ = $10^6$ $ms$, $Nbit$ = 100 *réalisations* |
| densité de bruit (noise density) en dBm/Hz | -174 |
| V | $10^{14}$ |

**Revendications**

1. Procédé (1) d'allocation de ressources de transmission, mis en œuvre par un réseau d'accès cellulaire comprenant une station de base, à au moins un terminal d'un ensemble de N paires de terminaux d'indice n, $N \ge 2$, candidats à une communication en direct, dits terminaux D2D, le canal entre deux terminaux D2D en communication en direct étant dit canal D2D, la station de base ayant la connaissance d'une statistique de l'état des canaux D2D, **caractérisé en ce qu'**il comprend pour un intervalle de transmission :

   - une détermination (2) par la station de base d'un sous-ensemble parmi différents sous-ensembles de terminaux D2D de l'ensemble qui minimise de manière statistique une fonction d'utilité $\upsilon_n(t)$,
   - une requête (3) de la station de base aux terminaux D2D du sous-ensemble leur demandant de remonter simultanément une puissance minimale et un débit maximal qui minimisent leur métrique d'utilité,
   - une détermination (4) par chaque terminal D2D du sous-ensemble d'une puissance minimale et d'un débit maximal qui minimisent sa métrique d'utilité,
   - une remontée (5) par les terminaux D2D du sous-ensemble vers la station de base de leur puissance minimale et de leur débit maximal déterminés,

- une détermination (6) par la station de base d'un terminal D2D, parmi les terminaux D2D du sous-ensemble, dont la fonction d'utilité appliquée à sa puissance et son débit remontés est minimale pour lui allouer (7) des ressources spectrales pour transmettre pendant l'intervalle de transmission.

2. Procédé (1) d'allocation de ressources de transmission selon la revendication 1 selon lequel la détermination du sous-ensemble parmi différents sous-ensembles de terminaux D2D de l'ensemble qui minimise de manière statistique une fonction d'utilité $\upsilon_n(t)$ consiste à déterminer le sous-ensemble qui minimise la moyenne de la somme des puissances émises minimales sous contrainte de maximiser les débits.

3. Procédé (1) d'allocation de ressources de transmission selon la revendication 1 selon lequel la station de base détermine autant de sous-ensembles que de ressources de transmission différentes pouvant être allouées simultanément pendant un même intervalle de transmission.

4. Procédé (1) d'allocation de ressources de transmission selon la revendication 1 selon lequel le réseau d'accès est de type LTE et la requête (3) de la station de base utilise un canal de contrôle descendant PDCCH du réseau d'accès.

5. Procédé (1) d'allocation de ressources de transmission selon la revendication 1 selon lequel le réseau d'accès est de type LTE et la puissance remontée est quantifiée sur au maximum deux bits d'un canal de contrôle PUCCH.

6. Station de base pour allouer des ressources de transmission à au moins un terminal d'un ensemble de $N$ paires de terminaux d'indice n, $N \geq 2$, candidats à une communication en direct, dits terminaux D2D, le canal entre deux terminaux D2D en communication en direct étant dit canal D2D, la station de base ayant la connaissance d'une statistique de l'état des canaux D2D, **caractérisé en ce que** la station de base comprend :

   - un processeur pour déterminer un sous-ensemble parmi différents sous-ensembles de terminaux D2D de l'ensemble qui minimise de manière statistique une fonction d'utilité $\upsilon_n(t),$
   - un émetteur pour émettre une requête à destination des terminaux D2D du sous-ensemble leur demandant de remonter simultanément une puissance minimale et un débit maximal qui minimisent leur métrique d'utilité,
   - un récepteur pour recevoir de chaque terminal du sous-ensemble, une puissance minimale et un débit maximal qui minimisent la métrique d'utilité du terminal,
   - un processeur pour déterminer un terminal D2D, parmi les terminaux D2D du sous-ensemble, dont la fonction d'utilité appliquée à sa puissance et son débit remontés est minimale et pour lui allouer (7) des ressources spectrales pour transmettre pendant l'intervalle de transmission.

7. Station de base selon la revendication 6 telle que le récepteur extrait la puissance remontée par un terminal D2D d'un message de contrôle PUCCH comprenant au maximum deux bits codant quatre niveaux de puissance.

8. Réseau d'accès comprenant au moins une station de base selon la revendication précédente.

9. Réseau d'accès selon la revendication 8 selon lequel déterminer le sous-ensemble parmi différents sous-ensembles de terminaux D2D de l'ensemble qui minimise de manière statistique une fonction d'utilité $\upsilon_n(t)$ consiste à déterminer le sous-ensemble qui minimise la moyenne de la somme des puissances émises minimales sous contrainte de maximiser les débits.

10. Réseau d'accès selon la revendication 8 selon lequel la station de base détermine autant de sous-ensembles que de ressources de transmission différentes pouvant être allouées simultanément pendant un même intervalle de transmission.

11. Réseau d'accès selon la revendication 8 selon lequel le réseau d'accès est de type LTE et la requête (3) de la station de base utilise un canal de contrôle descendant PDCCH du réseau d'accès.

12. Réseau d'accès selon la revendication 8 selon lequel le réseau d'accès est de type LTE et la puissance remontée est quantifiée sur au maximum deux bits d'un canal de contrôle PUCCH.

13. Terminal D2D pour faire partie d'un ensemble de $N$ paires de terminaux d'indice n, $N \geq 2$ dans la couverture d'une station de base, candidats à une communication en direct, dits terminaux D2D, le canal entre deux terminaux D2D en communication en direct étant dit canal D2D **caractérisé en ce que** le terminal comprend :

- un récepteur pour recevoir une requête provenant de la station de base lui demandant de remonter simultanément une puissance minimale $P_{n,m}*(t)$ et un débit maximal $R_m*(t)$ qui minimisent une métrique d'utilité,
- une unité de traitement pour déterminer sa puissance minimale $P_{n,m}*(t)$ et son débit maximal $R_m*(t)$ qui minimisent cette métrique d'utilité,
- un émetteur pour transmettre via une voie de retour vers la station de base sa puissance minimale $P_{n,m}*(t)$ et son débit maximal $R_m*(t)$ déterminés,

et ce que le récepteur reçoit les ressources spectrales qui lui sont allouées par la station de base pour transmettre pendant l'intervalle de transmission.

14. Produit programme d'ordinateur, ledit programme comportant des instructions de programme adaptées à la mise en œuvre d'un procédé d'allocation de ressources de transmission selon l'une quelconque des revendications 1 à 5 lorsque ledit programme est chargé et exécuté dans une station de base et dans des terminaux D2D destinés à mettre en œuvre le procédé d'allocation de ressources de transmission.

15. Support d'informations comportant des instructions de programme adaptées à la mise en œuvre d'un procédé d'allocation de ressources de transmission selon l'une quelconque des revendications 1 à 5 lorsque ledit programme est chargé et exécuté dans une station de base et dans des terminaux D2D destinés à mettre en œuvre le procédé d'allocation de ressources de transmission.

**Patentansprüche**

1. Verfahren (1) zur Zuweisung von Übertragungsressourcen, durchgeführt von einem eine Basisstation enthaltenden zellularen Zugangsnetzwerk, zu mindestens einem Endgerät einer Einheit von N Paaren von Endgeräten mit dem Index n, $N \geq 2$, die Kandidaten für eine direkte Kommunikation sind, D2D-Endgeräte genannt, wobei der Kanal zwischen zwei D2D-Endgeräten in direkter Kommunikation D2D-Kanal genannt wird, wobei der Basisstation eine Statistik des Zustands der D2D-Kanäle bekannt ist, **dadurch gekennzeichnet, dass** es für ein Übertragungsintervall enthält:

   - eine Bestimmung (2), durch die Basisstation, einer Teileinheit unter verschiedenen Teileinheiten von D2D-Endgeräten der Einheit, die eine Nutzenfunktion $\upsilon_n(t)$ statistisch minimiert,
   - eine Anforderung (3) der Basisstation an die D2D-Endgeräte der Teileinheit, die von ihnen verlangt, gleichzeitig eine minimale Leistung und einen maximalen Durchsatz rückzumelden, die ihre Nutzenmetrik minimieren,
   - eine Bestimmung (4), durch jedes D2D-Endgerät der Teileinheit, einer minimalen Leistung und eines maximalen Durchsatzes, die seine Nutzenmetrik minimieren,
   - eine Rückmeldung (5), durch die D2D-Endgeräte der Teileinheit zur Basisstation, ihrer bestimmten minimalen Leistung und ihres bestimmten maximalen Durchsatzes,
   - eine Bestimmung (6), durch die Basisstation, eines D2D-Endgeräts unter den D2D-Endgeräten der Teileinheit, dessen an seine rückgemeldete Leistung und rückgemeldeten Durchsatz angewendete Nutzenfunktion minimal ist, um ihm Spektralressourcen zuzuweisen (7), um während des Übertragungsintervalls zu übertragen.

2. Verfahren (1) zur Zuweisung von Übertragungsressourcen nach Anspruch 1, wobei die Bestimmung der Teileinheit unter verschiedenen Teileinheiten von D2D-Endgeräten der Einheit, die eine Nutzenfunktion $\upsilon_n(t)$ statistisch minimiert, darin besteht, die Teileinheit zu bestimmen, die den Mittelwert der Summe der minimalen gesendeten Leistungen bei zwangsweiser Maximierung der Durchsätze minimiert.

3. Verfahren (1) zur Zuweisung von Übertragungsressourcen nach Anspruch 1, wobei die Basisstation so viele Teileinheiten wie unterschiedliche Übertragungsressourcen bestimmt, die gleichzeitig während eines gleichen Übertragungsintervalls zugewiesen werden können.

4. Verfahren (1) zur Zuweisung von Übertragungsressourcen nach Anspruch 1, wobei das Zugangsnetzwerk vom Typ LTE ist und die Anforderung (3) der Basisstation einen Downlink-Steuerkanal PDCCH des Zugangsnetzwerks verwendet.

5. Verfahren (1) zur Zuweisung von Übertragungsressourcen nach Anspruch 1, wobei das Zugangsnetzwerk vom Typ LTE ist und die rückgemeldete Leistung über maximal zwei Bits eines Steuerkanals PUCCH quantifiziert wird.

6. Basisstation zur Zuweisung von Übertragungsressourcen an mindestens ein Endgerät einer Einheit von N Paaren von Endgeräten mit dem Index n, N ≥ 2, die Kandidaten für eine direkte Kommunikation sind, D2D-Endgeräte genannt, wobei der Kanal zwischen zwei D2D-Endgeräten in direkter Kommunikation D2D-Kanal genannt wird, wobei der Basisstation eine Statistik des Zustands der D2D-Kanäle bekannt ist, **dadurch gekennzeichnet, dass** die Basisstation enthält:

   - einen Prozessor zur Bestimmung einer Teileinheit unter verschiedenen Teileinheiten von D2D-Endgeräten der Einheit, die eine Nutzenfunktion $\upsilon_n(t)$ statistisch minimiert,
   - einen Sender zum Senden einer Anforderung an die D2D-Endgeräte der Teileinheit, die von ihnen verlangt, gleichzeitig eine minimale Leistung und einen maximalen Durchsatz rückzumelden, die ihre Nutzenmetrik minimieren,
   - einen Empfänger zum Empfang von jedem Endgerät der Teileinheit einer minimalen Leistung und eines maximalen Durchsatzes, die die Nutzenmetrik des Endgeräts minimieren,
   - einen Prozessor zur Bestimmung eines D2D-Endgeräts unter den D2D-Endgeräten der Teileinheit, dessen an seine rückgemeldete Leistung und rückgemeldeten Durchsatz angewendete Nutzenfunktion minimal ist, und um ihm Spektralressourcen zuzuweisen (7), um während des Übertragungsintervalls zu übertragen.

7. Basisstation nach Anspruch 6 derart, dass der Empfänger die von einem D2D-Endgerät rückgemeldete Leistung aus einer Steuernachricht PUCCH entnimmt, die maximal zwei Bits enthält, die vier Leistungspegel codieren.

8. Zugangsnetzwerk, das mindestens eine Basisstation nach dem vorhergehenden Anspruch enthält.

9. Zugangsnetzwerk nach Anspruch 8, wobei die Bestimmung der Teileinheit unter verschiedenen Teileinheiten von D2D-Endgeräten der Einheit, die eine Nutzenfunktion $\upsilon_n(t)$ statistisch minimiert, darin besteht, die Teileinheit zu bestimmen, die den Mittelwert der Summe der minimalen gesendeten Leistungen bei zwangsweiser Maximierung der Durchsätze minimiert.

10. Zugangsnetzwerk nach Anspruch 8, wobei die Basisstation so viele Teileinheiten wie unterschiedliche Übertragungsressourcen bestimmt, die gleichzeitig während eines gleichen Übertragungsintervalls zugewiesen werden können.

11. Zugangsnetzwerk nach Anspruch 8, wobei das Zugangsnetzwerk vom Typ LTE ist, und die Anforderung (3) der Basisstation einen Downlink-Steuerkanal PDCCH des Zugangsnetzwerks verwendet.

12. Zugangsnetzwerk nach Anspruch 8, wobei das Zugangsnetzwerk vom Typ LTE ist, und die rückgemeldete Leistung über maximal zwei Bits eines Steuerkanals PUCCH quantifiziert wird.

13. D2D-Endgerät, um Teil einer Einheit von N Paaren von Endgeräten mit dem Index n, N ≥ 2, in der Reichweite einer Basisstation zu sein, die Kandidaten für eine direkte Kommunikation sind, D2D-Endgeräte genannt, wobei der Kanal zwischen zwei D2D-Endgeräten in direkter Kommunikation D2D-Kanal genannt wird, **dadurch gekennzeichnet, dass** das Endgerät enthält:

   - einen Empfänger zum Empfang einer von der Basisstation kommenden Anforderung, die von ihm verlangt, gleichzeitig eine minimale Leistung $P_{n,m}{}^*(t)$ und einen maximalen Durchsatz $R_m{}^*(t)$ rückzumelden, die eine Nutzenmetrik minimieren,
   - eine Verarbeitungseinheit zur Bestimmung seiner minimalen Leistung $P_{n,m}{}^*(t)$ und seines maximalen Durchsatzes $R_m{}^*(t)$, die diese Nutzenmetrik minimieren,
   - einen Sender zur Übertragung seiner bestimmten minimalen Leistung $P_{n,m}{}^*(t)$ und seines bestimmten maximalen Durchsatzes $R_m{}^*(t)$ über einen Rückkanal zur Basisstation,

   und dass der Empfänger die Spektralressourcen empfängt, die ihm von der Basisstation zugewiesen werden, um während des Übertragungsintervalls zu übertragen.

14. Computerprogrammprodukt, wobei das Programm Programmanweisungen aufweist, die zur Durchführung eines Verfahrens zur Zuweisung von Übertragungsressourcen nach einem der Ansprüche 1 bis 5 geeignet sind, wenn das Programm in eine Basisstation und in D2D-Endgeräte geladen und ausgeführt wird, die dazu bestimmt sind, das Verfahren zur Zuweisung von Übertragungsressourcen durchzuführen.

**15.** Datenträger, der Programmanweisungen aufweist, die zur Durchführung eines Verfahrens zur Zuweisung von Übertragungsressourcen nach einem der Ansprüche 1 bis 5 geeignet sind, wenn das Programm in eine Basisstation und in D2D-Endgeräte geladen und ausgeführt wird, die dazu bestimmt sind, das Verfahren zur Zuweisung von Übertragungsressourcen durchzuführen.

**Claims**

**1.** Method (1) for allocating transmission resources, implemented by a cellular access network comprising a base station, to at least one terminal of a set of N pairs of terminals indexed n, N $\geq$ 2, which are candidates for a direct communication, called D2D terminals, the channel between two D2D terminals in direct communication being called a D2D channel, the base station knowing a statistic on the state of the D2D channels, **characterized in that** it comprises, for a transmission interval:

- the base station determining (2) a subset from among various subsets of D2D terminals of the set that statistically minimizes a utility function $v_n(t)$,
- a request (3) from the base station to the D2D terminals of the subset, asking them to simultaneously feed back a minimum power and a maximum data rate that minimize their utility metric,
- each D2D terminal of the subset determining (4) a minimum power and a maximum data rate that minimize its utility metric,
- the D2D terminals of the subset feeding back (5) their determined minimum power and their determined maximum data rate to the base station,
- the base station determining (6) a D2D terminal, from among the D2D terminals of the subset, whose utility function applied to its fed-back power and its fed-back data rate is minimum, in order to allocate (7) thereto spectral resources to transmit during the transmission interval.

**2.** Method (1) for allocating transmission resources according to Claim 1, wherein determining the subset from among various subsets of D2D terminals of the set that statistically minimizes a utility function $v_n(t)$ consists in determining the subset that minimizes the average of the sum of the minimum emitted powers under the constraint of maximizing the data rates.

**3.** Method (1) for allocating transmission resources according to Claim 1, wherein the base station determines as many subsets as there are different transmission resources able to be allocated simultaneously during one and the same transmission interval.

**4.** Method (1) for allocating transmission resources according to Claim 1, wherein the access network is an LTE access network and the request (3) from the base station uses a PDCCH downlink control channel of the access network.

**5.** Method (1) for allocating transmission resources according to Claim 1, wherein the access network is an LTE access network and the fed-back power is quantized on at most two bits of a PUCCH control channel.

**6.** Base station for allocating transmission resources to at least one terminal of a set of N pairs of terminals indexed n, N $\geq$ 2, which are candidates for a direct communication, called D2D terminals, the channel between two D2D terminals in direct communication being called a D2D channel, the base station knowing a statistic on the state of the D2D channels, **characterized in that** the base station comprises:

- a processor for determining a subset from among various subsets of D2D terminals of the set that statistically minimizes a utility function $v_n(t)$,
- a transmitter for transmitting a request to the D2D terminals of the subset, asking them to simultaneously feed back a minimum power and a maximum data rate that minimize their utility metric,
- a receiver for receiving, from each terminal of the subset, a minimum power and a maximum data rate that minimize the utility metric of the terminal,
- a processor for determining a D2D terminal, from among the D2D terminals of the subset, whose utility function applied to its fed-back power and its fed-back data rate is minimum, in order to allocate (7) thereto spectral resources to transmit during the transmission interval.

**7.** Base station according to Claim 6, such that the receiver extracts the power fed back by a D2D terminal from a PUCCH control message comprising at most two bits encoding four power levels.

8. Access network comprising at least one base station according to the preceding claim.

9. Access network according to Claim 8, wherein determining the subset from among various subsets of D2D terminals of the set that statistically minimizes a utility function $v_n(t)$ consists in determining the subset that minimizes the average of the sum of the minimum emitted powers under the constraint of maximizing the data rates.

10. Access network according to Claim 8, wherein the base station determines as many subsets as there are different transmission resources able to be allocated simultaneously during one and the same transmission interval.

11. Access network according to Claim 8, wherein the access network is an LTE access network and the request (3) from the base station uses a PDCCH downlink control channel of the access network.

12. Access network according to Claim 8, wherein the access network is an LTE access network and the fed-back power is quantized on at most two bits of a PUCCH control channel.

13. D2D terminal for forming part of a set of N pairs of terminals indexed n, $N \geq 2$, within the coverage of a base station, which are candidates for a direct communication, called D2D terminals, the channel between two D2D terminals in direct communication being called a D2D channel, **characterized in that** the terminal comprises:

   - a receiver for receiving a request from the base station, asking it to simultaneously feed back a minimum power $P_{n,m}\cdot(t)$ and a maximum data rate $R_m\cdot(t)$ that minimize a utility metric,
   - a processing unit for determining its minimum power $P_{n,m}\cdot(t)$ and its maximum data rate $R_m\cdot(t)$ that minimize this utility metric,
   - a transmitter for transmitting its determined minimum power $P_{n,m}\cdot(t)$ and its determined maximum data rate $R_m\cdot(t)$ via a return channel to the base station,

   and **in that** the receiver receives the spectral resources that are allocated thereto by the base station to transmit during the transmission interval.

14. Computer program product, said program comprising program instructions designed to implement a method for allocating transmission resources according to any one of Claims 1 to 5 when said program is loaded and executed in a base station and in D2D terminals intended to implement the method for allocating transmission resources.

15. Information medium comprising program instructions designed to implement a method for allocating transmission resources according to any one of Claims 1 to 5 when said program is loaded and executed in a base station and in D2D terminals intended to implement the method for allocating transmission resources.

Fig.1

Fig.2

**Fig.3**

**Fig.4**

Fig.5

Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K. DOPPLER ; M. RINNE ; C. WIJTING ; C. RIBEIRO ; K. HUGL.** Device-to-device communication as an underlay to lte-advanced networks. *IEEE Commun. Mag.,* 2009, vol. 47 (12), 42-49
- **A. AIJAZ ; M. TSHANGINI ; M. NAKHAI ; X. CHU ; A. AGHVAMI.** Energy-efficient uplink resource allocation in LTE networks with M2M/H2H co-existence under statistical qos guarantees. *Communications, IEEE Transactions on,* 2014, vol. 62, 2353-2365
- Design Aspects of Network Assisted Device-to-Device Communications. **GÁBOR FODOR ; ERIK DAHLMAN ; GUNNAR MILDH ; STEFAN PARKVALL ; NORBERT REIDER ; GYÖRGY MIKLÓS ; ZOLTÂN TURÁNYI.** Communications Magazine. IEEE, 2012
- **M. J. N. L. GEORGIADIS ; L. TASSIULAS.** Resource allocation and cross-layer control in wireless networks. 2006, 49-57